# FASCICULE DE BREVET EUROPEEN

(11) **EP 2 767 695 B1**
(45) Date de publication et mention de la délivrance du brevet: **19.04.2017**
(21) Numéro de dépôt: 14305205.8
(22) Date de dépôt: 14.02.2014
(51) Int. Cl.: F02B 37/18, F16K 1/20

(54) **Vanne de conduite de dérivation d'un turbocompresseur munie d'un volet de fermeture à déflecteur**
Ventil einer Verzweigungsleitung eines Turbokompressors, der mit einer Schließklappe mit Ablenker ausgestattet ist
Valve of a bypass line of a turbocompressor provided with a shutter with deflector

(30) Priorité: 15.02.2013 FR 1351300
(43) Date de publication de la demande: 20.08.2014
(73) Titulaire: Renault S.A.S., 92100 Boulogne-Billancourt (FR)
(72) Inventeur: DUMAS, Eric, 78800 HOUILLES (FR); CHANCERELLE, Jean-Baptiste, 92500 RUEIL-MALMAISON (FR)

(56) Documents cités:
- EP-A1- 2 199 564
- EP-A1- 2 251 533
- WO-A1-2009/106161
- DE-A1- 3 336 879
- DE-A1-102004 048 860

## Description

### Domaine technique de l'invention

L'invention concerne le domaine des moteurs de véhicules automobiles.

L'invention a pour objet plus particulièrement un volet de fermeture pour vanne notamment utilisée dans un conduit de dérivation vers une turbine de turbocompresseur.

L'invention a aussi pour objet une vanne comprenant le volet, un groupe moto-propulseur comprenant la vanne ainsi qu'un véhicule comprenant le groupe moto-propulseur.

### État de la technique

Dans un groupe motopropulseur, après la combustion dans un moteur, les gaz d'échappement sont de façon connue collectés dans un collecteur d'échappement (non représenté). Ils peuvent ensuite être dirigés vers un premier turbocompresseur et vers un second turbocompresseur permettant ainsi une double suralimentation. Les premier et second turbocompresseurs forment respectivement un premier étage de suralimention et un deuxième étage de suralimentation. L'entrée de ce deuxième étage de suralimentation comporte, de préférence, deux sections de diffusion des gaz connectées à des conduits tubulaires menant à une chambre d'entrée des gaz. Un des deux conduits tubulaires présente une extrémité en saillie d'une paroi d'entrée dans ladite chambre et coupée de façon oblique par rapport à l'axe dudit tube, formant une ouverture oblique ou en biseau dont la zone la plus en aval selon le sens d'écoulement des gaz est tournée vers une paroi latérale de la chambre d'entrée. Un volet de fermeture adapté pour fermer ladite ouverture oblique comporte un plateau sensiblement ovale porté à l'extrémité d'un bras pivotant autour d'un axe transversal à l'axe du conduit d'écoulement des gaz et fixé contre la paroi d'entrée du côté le plus en amont selon le sens d'écoulement des gaz. Le pivotement d'un angle faible de l'ordre de quelques degrés entraine un espace d'ouverture important à l'extrémité diamétralement opposée à l'axe de pivotement. Les gaz sont donc dirigés vers l'extrémité diamétralement opposée à l'axe de pivotement et sont susceptibles de frapper une paroi de la chambre d'entrée pour ensuite rebondir vers le centre de la chambre d'entrée.

Une vanne de conduite de dérivation avec un volet de fermeture est connu du document EP 2 251 533 A1. Il a été observé l'apparition de fissures liées aux chocs thermiques répétés induits par l'ouverture répétée de la vanne.

Typiquement, ces fissures ont été remarquées lorsque l'ouverture du volet par rapport au siège de vanne avec lequel il vient coopérer est de 2mm à 5mm. Cette ouverture particulière permet une répartition de débit idéale pour un fonctionnement optimal d'un moteur à son couple maximal. Il convient donc de trouver une solution au phénomène de fissuration permettant de conserver une telle ouverture.

L'éloignement de ladite paroi latérale de la chambre d'entrée peut participer à la diminution des risques de fissures dus à l'effet chalumeau des gaz chauds qui frappent ladite paroi latérale mais est contraint par des problèmes de dimensionnement ; d'une part, une distance d'éloignement importante n'est pas avantageuse à tous les régimes de fonctionnement du moteur, en effet les gaz ne sont pas dirigés de façon optimale vers le centre de la chambre à de bas régimes du moteur, et d'autre part les contraintes de dimensionnement du moteur ne permettent pas d'avoir des chambres d'entrée de grand volume.

### Objet de l'invention

Le but de la présente invention est de proposer une solution qui remédie aux inconvénients listés ci-dessus.

On tend vers ce but grâce à une vanne de conduite de dérivation d'un turbocompresseur d'un moteur de véhicule automobile comprenant :
- un corps de vanne cylindrique débouchant en saillie d'une paroi d'entrée d'une chambre d'entrée de gaz et présentant une ouverture oblique,
- un volet de fermeture comprenant une surface de contact destinée à coopérer avec le corps de vanne de sorte à obturer l'ouverture oblique du corps de vanne dans une configuration de fermeture de la vanne,
et en ce que le volet comporte un déflecteur agencé sur au moins une partie d'une périphérie extérieure de la surface de contact.

Selon une réalisation, le déflecteur est formé par un chanfrein comportant un segment rectiligne présentant une dimension au moins égale à 2 mm.

Par exemple, le profil du chanfrein comporte un segment rectiligne formant un angle avec la surface de contact compris entre 15 degrés et 80 degrés.

Selon une autre réalisation, le déflecteur est formé par un coin arrondi concave de la périphérie extérieure de la surface de contact et la dimension du déflecteur formé par l'arc dudit arrondi est au moins égal à 2mm.

De préférence, le déflecteur est délimité au moins en partie par une surface tronconique tout autour de la surface de contact.

Selon une mise en oeuvre, le volet est adapté à pivoter autour d'un axe transversal à un axe du corps de vanne disposé contre la paroi d'entrée de la chambre du côté de la partie en amont, selon le sens du flux d'écoulement des gaz, de l'ouverture oblique du corps de vanne.

Avantageusement, le corps de vanne comporte un fût présentant une extrémité délimitant une portée d'appui configurée de sorte à coopérer avec la surface de contact dans la configuration de fermeture de la vanne, et en ce que le déflecteur s'étend au moins en partie radialement audit fût dans la configuration de fermeture.

La dimension du déflecteur peut être maximale dans la partie diamétralement opposée à l'axe transversal de pivotement du volet.

L'invention est aussi relative à un groupe moto-propulseur de véhicule automobile comprenant :
- un moteur,
- un turbocompresseur dont une turbine est disposée de sorte à être traversée par au moins une partie d'un flux de gaz d'échappement du moteur,
- une conduite de dérivation de la turbine du turbocompresseur configurée pour dériver tout ou partie du flux de gaz d'échappement en amont de la turbine,
- une vanne telle que décrite disposée dans la conduite de dérivation.

De préférence, la vanne présente successivement, selon la direction d'écoulement des gaz d'échappement dans la conduite de dérivation, le corps de vanne puis le volet de fermeture.

L'invention est aussi relative à un véhicule automobile comprenant un groupe moto-propulseur tel que décrit.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 représente une vanne comprenant un volet selon un mode d'exécution de l'invention,
- la figure 2 illustre une vue en coupe selon B-B de la figure 1,
- la figure 3 illustre une vue en coupe d'une vanne du type de la figure 1 mais dans une configuration de fermeture de la vanne,
- la figure 4 illustre une vue en perspective d'une turbine de turbocompresseur équipée d'une conduite de dérivation munie d'une vanne selon un mode d'exécution de l'invention,
- la figure 5 est une vue en coupe de la figure 4 pratiquée de sorte à révéler l'intérieur de la conduite de dérivation,
- la figure 6 est un schéma de principe illustrant un groupe moto-propulseur selon un mode d'exécution de l'invention.

### Description de modes préférentiels de l'invention

Ainsi, l'invention a pour objet une vanne de conduite de dérivation d'un turbocompresseur d'un moteur de véhicule automobile dont un volet de fermeture décrit ci-après diffère de l'art antérieur notamment en ce qu'il a été modifié en forme de sorte à diminuer la vitesse du gaz traversant la vanne afin d'obtenir un flux plus diffus limitant l'endommagement des conduites au niveau de la vanne. La vanne de conduite de dérivation est aussi communément appelée dans le domaine clapet de by-pass.

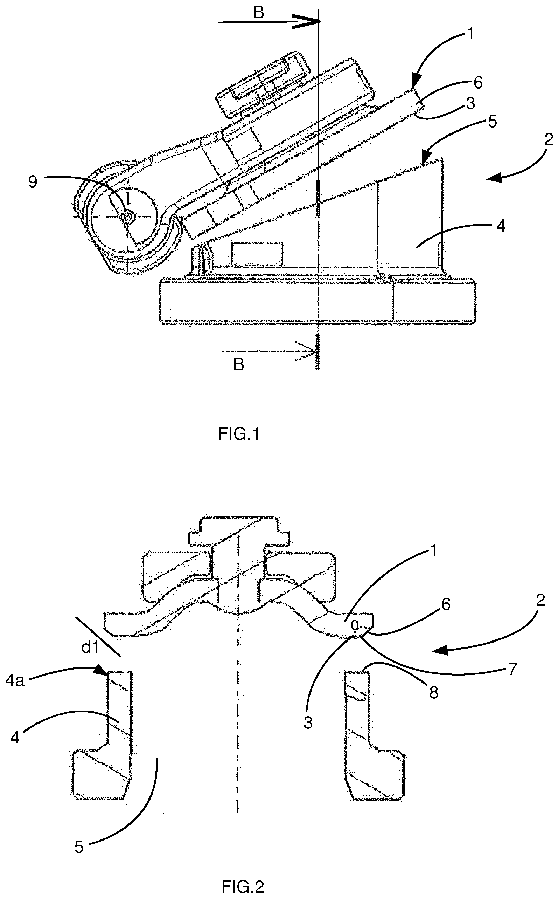

Comme illustré aux figures 1 et 2, une vanne de conduite de dérivation d'un turbocompresseur d'un moteur de véhicule automobile comporte un volet 1 de fermeture. Le volet 1 est préférentiellement un plateau sensiblement ovale. Le volet 1 comprend une surface de contact 3 destinée à coopérer avec un corps de vanne 4 (aussi appelé siège de vanne dans le domaine) de la vanne 2 de sorte à obturer une ouverture 5 oblique du corps de vanne 4 dans une configuration de fermeture de la vanne 2. Le corps de vanne 4 est cylindrique, ou sensiblement cylindrique, et il débouche en saillie d'une paroi d'entrée de gaz tout en présentant l'ouverture oblique 5. La paroi d'entrée de gaz peut aussi former une partie de la conduite de dérivation.

En fait, l'ouverture oblique 5 est dite oblique par rapport à l'axe du cylindre du corps de vanne 4. L'axe du cylindre est parallèle à la droite génératrice dudit cylindre. Autrement dit, l'ouverture oblique 5 peut comporter une portée d'appui 8 configurée de sorte à coopérer avec la surface de contact 3 dans la configuration de fermeture de la vanne 4, ladite portée d'appui 8 étant inclue dans un plan sécant audit axe du cylindre.

Le volet 1 de fermeture comporte un déflecteur 6 agencé sur au moins une partie d'une périphérie extérieure de la surface de contact 3. C'est ce déflecteur 6 qui permet de limiter ou d'éviter le phénomène de fissuration de l'état de la technique.

Un tel volet 1 est avantageusement fixé à une extrémité d'un bras pivotant autour d'un axe sensiblement transversal à l'axe du corps de vanne fixé contre la paroi d'entrée de la chambre d'entrée du côté amont de l'ouverture 5 selon la direction d'écoulement des gaz. Autrement dit, le volet 1 est adapté à pivoter autour de l'axe transversal à l'axe du corps de vanne 4 disposé contre la paroi d'entrée de la chambre d'entrée du côté de la partie en amont, selon le sens du flux d'écoulement des gaz, de l'ouverture oblique 5 du corps de vanne 4.

Selon un mode de réalisation, le déflecteur 6 est formé par un chanfrein. Par définition, un chanfrein comporte un profil droit. Un tel déflecteur 6 permet d'éclater un flux de gaz en guidant son écoulement au niveau du volet 1 lorsque la vanne 2 associée passe de la configuration de fermeture à une configuration d'ouverture.

Par « chanfrein de profil droit », on entend que le volet 1 comporte une section de coupe dont le profil comporte une partie inclinée par rapport à la surface de contact 3.

Comme on le voit à la figure 2, le chanfrein 6, ou plus exactement le profil du chanfrein, comporte un segment rectiligne formant de préférence un angle α (figure 2) avec la surface de contact 3. De préférence, cet angle est compris entre 15 degrés et 80 degrés. Autrement dit, le segment rectiligne issu du profil de la section de coupe évoqué ci-dessus peut former un angle avec une autre partie du profil définissant la surface de contact 3.

De préférence, le segment rectiligne présente une dimension d1 au moins égale 2mm. Cette dimension minimale permet de perturber de manière optimale le flux de gaz afin de le diffuser de manière guidée lors de l'ouverture de la vanne : les gaz sont amenés à lécher le chanfrein et ramenés vers le centre de la chambre avant de frapper la paroi.

Selon un deuxième mode de réalisation, le déflecteur 6 est formé par un coin arrondi concave de la périphérie extérieure de la surface de contact 3. La dimension du déflecteur formé par l'arc de l'arrondi est au moins égal à 2mm. Cette dimension minimale permet de perturber de manière optimale le flux de gaz afin de le diffuser de manière guidée lors de l'ouverture de la vanne. Les gaz sont mieux dirigés vers le centre de la chambre d'entrée en léchant le coin arrondi lorsque le volet 1est en configuration d'ouverture de la vanne.

Avantageusement, le déflecteur 6 est délimité au moins en partie par une surface tronconique tout autour de la surface de contact 3. Ceci permet d'augmenter la surface efficace du déflecteur 6 et d'optimiser au mieux la diffusion du flux de gaz à la sortie de la vanne 2. Cette surface tronconique peut présenter un profil divergent. La divergence du profil est orientée selon la direction du flux destiné à venir en contact avec le déflecteur 6 lors de l'ouverture de la vanne 2.

Alternativement, le volet 1 comporte une portion formant le déflecteur et correspondant à une surface délimitée par un secteur angulaire d'une surface tronconique autour de son axe de révolution.

De manière préférentielle, le déflecteur 6 s'étend sur une partie de la périphérie extérieure de la surface de contact 3, sensiblement sur un arc de 300° avec le centre situé diamétralement opposé à l'axe de pivotement. En effet, les gaz sont d'abord dirigés par une surface d'impact du plateau formant le volet vers l'extrémité diamétralement opposée à l'axe de pivotement, puis ils sont amenés à lécher la partie de déflecteur disposée à cette extrémité.

Selon un autre mode de réalisation, le profil du déflecteur 6 est accentué dans la zone d'extrémité diamétralement opposée à l'axe de pivotement pour améliorer le guidage des gaz, la dimension du déflecteur peut par exemple croître d'une valeur minimale en bordure de la partie de zone périphérique extérieure de la surface d'appui jusqu'à une valeur maximale à l'extrémité diamétralement opposée à l'axe de pivotement du volet. De préférence, la dimension du déflecteur 6 est maximale dans la partie diamétralement opposée à l'axe transversal de pivotement du volet 1. Par exemple, la dimension d1 du segment rectiligne pour le chanfrein peut passer d'une valeur de 2 mm en bordure de la zone périphérique de déflection à 4 ou 5 mm à l'extrémité diamétralement opposée à l'axe de pivotement.

De manière générale, la vanne 2 peut varier entre la configuration de fermeture dans laquelle la surface de contact 3 et la portée d'appui 8 sont en contact et une configuration d'ouverture dans laquelle des gaz peuvent traverser ladite vanne 2 en passant au travers de l'ouverture 5 du corps de vanne 4. Le contact entre la surface de contact 3 et la portée d'appui 8 est, de préférence, étanche aux gaz destinés à traverser la vanne 2 lorsque cette dernière est dans la configuration d'ouverture.

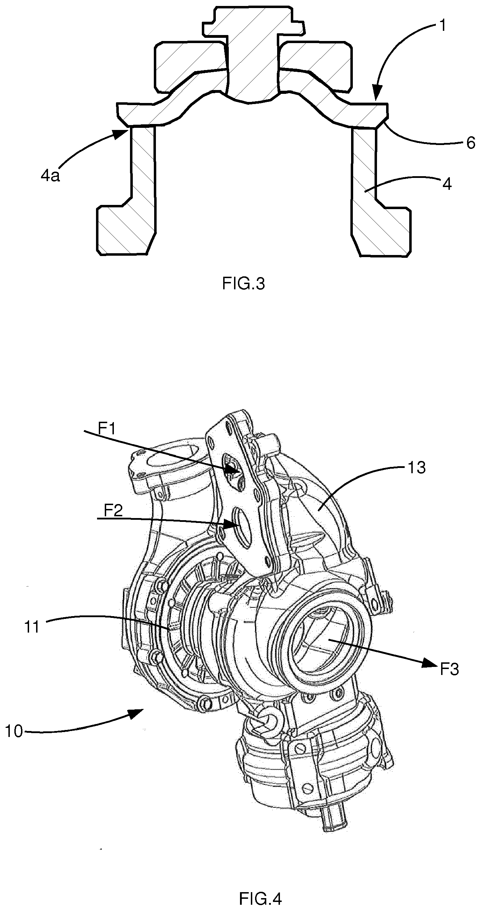

De manière préférentielle, le corps de vanne 4 comporte un fût présentant une extrémité 4a délimitant la portée d'appui 8 et le déflecteur 6 s'étend au moins en partie radialement audit fût dans la configuration de fermeture (figure 3). Autrement dit, à la figure 3 en configuration de fermeture de la vanne, le volet 1 délimite une collerette au niveau de son intersection avec le fût 4. C'est cette collerette et sa forme particulière qui forme alors le déflecteur 6 lors de l'ouverture de la vanne 2. Les dimensions d'une telle collerette génèrent une augmentation de la surface « normale » du volet 1, ceci a pour effet d'augmenter l'effort résistant pour le maintien du volet 1 dans la configuration voulue d'ouverture. L'homme du métier sera capable à l'aide de ses connaissances d'utiliser un système d'ouverture et de maintien de la configuration voulue d'ouverture idoine en fonction du dimensionnement du volet 1 et des débits attendus du flux lors de son passage au travers de la vanne 2.

Comme illustré à la figure 1, le volet 1 peut être articulé par exemple par une liaison pivot 9. Le pivotement à partir de cette liaison pivot 9 permet le passage de la configuration de fermeture à la configuration d'ouverture et inversement. Cette articulation peut être combinée à un système (non représenté) permettant de provoquer l'ouverture ou la fermeture de la vanne. Ce système peut aussi, dans le cadre de l'ouverture de la vanne, régler la position relative entre le volet 1 et le corps de vanne 4 de sorte à réguler ou à choisir un débit souhaité du flux de gaz traversant la vanne 2.

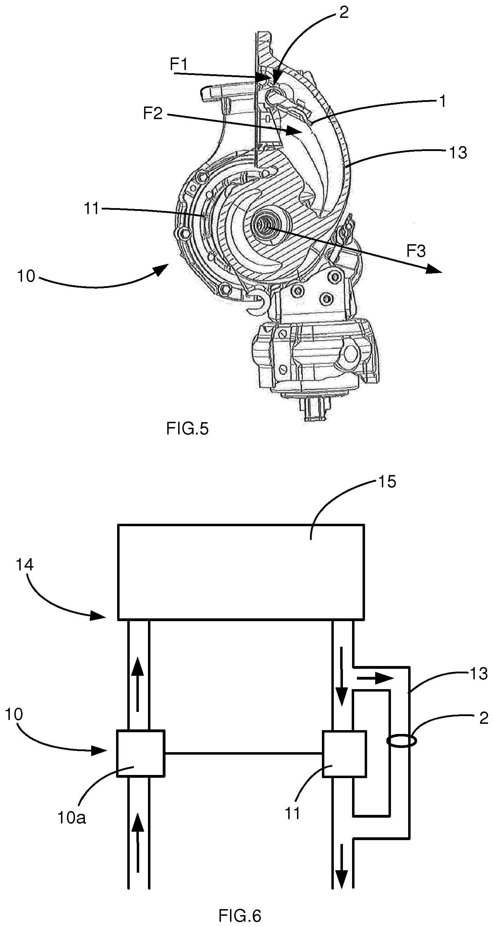

Les figures 4 et 5 illustrent un turbocompresseur 10. Classiquement, ce turbocompresseur 10 comporte une turbine 11 configurée de sorte à entraîner un compresseur (non représenté). Une conduite de dérivation 13 permet de gérer la circulation du flux F1, F2 de gaz entrant dans la turbine 11 par l'ouverture du volet 1. Un flux F3 se retrouve en sortie et correspond, le cas échéant, aux flux F1 et F2 d'entrée nonobstant des pertes de charges.

Comme illustré à la figure 6, un groupe moto-propulseur 14 de véhicule automobile peut comprendre un moteur 15, notamment thermique (c'est-à-dire à combustion interne), un turbocompresseur 10 dont la turbine 11 est disposée de sorte à être traversée par au moins une partie d'un flux de gaz d'échappement du moteur 15. Ladite au moins une partie de flux de gaz d'échappement permet avantageusement de mettre en rotation la turbine 11 afin que cette dernière entraîne un compresseur 10a par exemple des gaz d'admission du moteur 15. Le groupe moto-propulseur comporte en outre une conduite de dérivation 13 de la turbine 11 du turbocompresseur 10 configurée pour dériver tout ou partie du flux de gaz d'échappement en amont de la turbine 11 (la notion d'amont s'entend selon le sens d'écoulement des gaz d'échappement), ainsi qu'une vanne 1 telle que décrite disposée dans la conduite de dérivation 13.

Ainsi, lorsque la vanne 2 est en configuration de fermeture, la conduite de dérivation 13 est obturée et lorsque la vanne 2 est en configuration d'ouverture la conduite de dérivation 13 permet la dérivation d'au moins une partie des gaz d'échappement afin de limiter plus ou moins leur impact sur la turbine 11.

Afin de permettre le fonctionnement optimal du déflecteur, la vanne présente successivement, selon la direction d'écoulement des gaz d'échappement, le corps de vanne 4 puis le volet 1 de fermeture.

Bien que l'exemple de la figure 6 représente un unique turbocompresseur, la vanne telle que décrite peut aussi être présente dans un groupe motopropulseur comprenant deux étages de suralimentation. Dans ce cas la vanne telle que décrite sera préférentiellement disposée au niveau d'une conduite de dérivation de la turbine du deuxième étage de suralimentation, c'est-à-dire la turbine d'un deuxième turbocompresseur situé en aval de la turbine d'un premier turbocompresseur selon l'écoulement du flux de gaz d'échappement.

Un véhicule automobile peut comprendre un groupe moto-propulseur tel que décrit précédemment.

La solution présentée par le déflecteur du volet tel que décrit permet de limiter voire d'éviter les apparitions de fissures tout en conservant une répartition idéale des gaz d'échappements sans détriment par rapport au couple du moteur et permet d'éviter les pertes de charges trop importantes à la sortie de la vanne ce qui aurait pour conséquence une diminution de la performance de la turbine disposée en aval selon le sens d'écoulement des gaz.

## Revendications

1. Vanne (2) de conduite de dérivation (13) d'un turbocompresseur d'un moteur de véhicule automobile comprenant :
- un corps de vanne (4) cylindrique débouchant en saillie d'une paroi d'entrée d'une chambre d'entrée de gaz et présentant une ouverture oblique (5) par rapport à l'axe du cylindre de corps de vanne,
- un volet de fermeture comprenant une surface de contact (3) destinée à coopérer avec le corps de vanne (4) de sorte à obturer l'ouverture oblique (5) du corps de vanne (4) dans une configuration de fermeture de la vanne (2),
**caractérisée en ce que** le volet est apte à pivoter autour d'un axe sensiblement transversal à l'axe du corps de vanne et fixé contre la paroi d'entrée de la chambre d'entrée du côté amont de l'ouverture (5) selon la direction d'écoulement des gaz, et comporte un déflecteur (6) agencé sur au moins une partie d'une périphérie extérieure de la surface de contact (3).

2. Vanne selon la revendication 1, **caractérisée en ce que** le déflecteur (6) est formé par un chanfrein comportant un segment rectiligne présentant une dimension au moins égale à 2 mm.

3. Vanne selon l'une quelconque des revendications 1 ou 2, **caractérisée en ce qu'**un profil du chanfrein (6) comporte un segment rectiligne formant un angle avec la surface de contact (3) compris entre 15 degrés et 80 degrés.

4. Vanne selon la revendication 1, **caractérisée en ce que** le déflecteur (6) est formé par un coin arrondi concave de la périphérie extérieure de la surface de contact (3) et **en ce que** la dimension du déflecteur formé par l'arc dudit arrondi est au moins égal à 2mm.

5. Vanne selon l'une quelconque des revendications 1 à 4, **caractérisée en ce que** le déflecteur (6) est délimité au moins en partie par une surface tronconique tout autour de la surface de contact (3).

6. Vanne selon l'une quelconque des revendications 1 à 5, **caractérisée en ce que** le volet est adapté à pivoter autour d'un axe transversal à un axe du corps de vanne disposé contre la paroi d'entrée de la chambre du côté de la partie en amont, selon le sens du flux d'écoulement des gaz, de l'ouverture oblique du corps de vanne.

7. Vanne selon l'une quelconque des revendications 1 à 6, **caractérisée en ce que** le corps de vanne (4) comporte un fût présentant une extrémité (4a) délimitant une portée d'appui (8) configurée de sorte à coopérer avec la surface de contact (3) dans la configuration de fermeture de la vanne, et **en ce que** le déflecteur (6) s'étend au moins en partie radialement audit fût dans la configuration de fermeture.

8. Vanne selon la revendication 6 ou les revendications 6 et 7, **caractérisée en ce que** la dimension du déflecteur est maximale dans la partie diamétralement opposée à l'axe transversal de pivotement du volet.

9. Groupe moto-propulseur de véhicule automobile comprenant :
- un moteur (15),
- un turbocompresseur (10) dont une turbine (11) est disposée de sorte à être traversée par au moins une partie d'un flux de gaz d'échappement du moteur (15),
- une conduite de dérivation (13) de la turbine (11) du turbocompresseur (10) configurée pour dériver tout ou partie du flux de gaz d'échappement en amont de la turbine (11),
- une vanne (2) selon l'une des revendications 1 à 8 disposée dans la conduite de dérivation (13).

10. Groupe moto-propulseur selon la revendication précédente, **caractérisé en ce que** la vanne (2) présente successivement, selon la direction d'écoulement des gaz d'échappement dans la conduite de dérivation (13), le corps de vanne (4) puis le volet (1) de fermeture.

11. Véhicule automobile comprenant un groupe moto-propulseur selon la revendication 10.

## Patentansprüche

1. Ventil (2) einer Bypassleitung (13) eines Turboladers eines Kraftfahrzeugmotors, das enthält:
- einen zylindrischen Ventilkörper (4), der von einer Eintrittswand einer Gaseintrittskammer vorstehend mündet und eine schräge Öffnung (5) bezüglich der Achse des Ventilkörperzylinders aufweist,
- eine Schließklappe, die eine Kontaktfläche (3) enthält, die dazu bestimmt ist, mit dem Ventilkörper (4) zusammenzuwirken, um die schräge Öffnung (5) des Ventilkörpers (4) in einer Schließkonfiguration des Ventils (2) zu verschließen,
**dadurch gekennzeichnet, dass** die Klappe um eine Achse im Wesentlichen quer zur Achse des Ventilkörpers und gegen die Eintrittswand der Eintrittskammer auf der gemäß der Strömungsrichtung der Gase stromaufwärtigen Seite der Öffnung (5) befestigt schwenken kann, und einen Deflektor (6) aufweist, der auf mindestens einem Teil eines Außenumfangs der Kontaktfläche (3) angeordnet ist.

2. Ventil nach Anspruch 1, **dadurch gekennzeichnet, dass** der Deflektor (6) von einer Abschrägung gebildet wird, die ein geradliniges Segment aufweist, das eine Abmessung von mindestens gleich 2 mm aufweist.

3. Ventil nach einem der Ansprüche 1 oder 2, **dadurch gekennzeichnet, dass** ein Profil der Abschrägung (6) ein geradliniges Segment aufweist, das einen Winkel mit der Kontaktfläche (3) bildet, der zwischen 15 Grad und 80 Grad liegt.

4. Ventil nach Anspruch 1, **dadurch gekennzeichnet, dass** der Deflektor (6) von einer konkaven abgerundeten Ecke des Außenumfangs der Kontaktfläche (3) gebildet wird, und dass die Abmessung des vom Bogen der Abrundung gebildeten Deflektors mindestens gleich 2mm ist.

5. Ventil nach einem der Ansprüche 1 bis 4, **dadurch gekennzeichnet, dass** der Deflektor (6) zumindest zum Teil von einer kegelstumpfförmigen Fläche ganz um die Kontaktfläche (3) herum begrenzt wird.

6. Ventil nach einem der Ansprüche 1 bis 5, **dadurch gekennzeichnet, dass** die Klappe geeignet ist, um eine Achse quer zu einer Achse des Ventilkörpers zu schwenken, die gegen die Eintrittswand der Kammer auf der Seite des gemäß der Strömungsrichtung der Gase stromaufwärtigen Teils der schrägen Öffnung des Ventilkörpers angeordnet ist.

7. Ventil nach einem der Ansprüche 1 bis 6, **dadurch gekennzeichnet, dass** der Ventilkörper (4) einen Schaft aufweist, der ein Ende (4a) hat, das eine Auflagerfläche (8) begrenzt, die so konfiguriert ist, dass sie mit der Kontaktfläche (3) in der Schließkonfiguration des Ventils zusammenwirkt, und dass der Deflektor (6) sich in der Schließkonfiguration mindestens zum Teil radial zum Schaft erstreckt.

8. Ventil nach Anspruch 6 oder den Ansprüchen 6 und 7, **dadurch gekennzeichnet, dass** die Abmessung des Deflektors in dem der Querschwenkachse der Klappe diametral entgegengesetzten Teil maximal ist.

9. Kraftfahrzeug-Antriebseinheit, die enthält:
- einen Motor (15),
- einen Turbolader (10), von dem eine Turbine (11) so angeordnet ist, dass sie von mindestens einem Teil einer Abgasströmung des Motors (15) durchquert wird,
- eine Bypassleitung (13) der Turbine (11) des Turboladers (10), die konfiguriert ist, die ganze oder einen Teil der Abgasströmung stromaufwärts vor der Turbine (11) umzuleiten,
- ein Ventil (2) nach einem der Ansprüche 1 bis 8, das in der Umgehungsleitung (13) angeordnet ist.

10. Antriebseinheit nach dem vorhergehenden Anspruch, **dadurch gekennzeichnet, dass** das Ventil (2) nacheinander in Strömungsrichtung der Abgase in der Bypassleitung (13) den Ventilkörper (4) und dann die Schließklappe (1) aufweist.

11. Kraftfahrzeug, das eine Antriebseinheit nach Anspruch 10 enthält.

## Claims

1. Valve (2) of a bypass line (13) of a turbocharger of a motor vehicle engine, comprising:
- a cylindrical valve body (4) projecting from an inlet wall of a gas inlet chamber and having an oblique opening (5) with respect to the axis of the valve body cylinder,
- a closure flap comprising a contact surface (3) intended to cooperate with the valve body (4) so as to shut off the oblique opening (5) of the valve body (4) in a closed configuration of the valve (2),
**characterized in that** the flap is able to pivot about an axis-forming pin substantially transverse to the axis of the valve body and fixed against the inlet wall of the inlet chamber on the upstream side of the opening (5) in the direction of flow of the gases, and comprises a deflector (6) arranged on at least one portion of an outer periphery of the contact surface (3).

2. Valve according to Claim 1, **characterized in that** the deflector (6) is formed by a chamfer comprising a rectilinear segment having a dimension at least equal to 2 mm.

3. Valve according to either one of Claims 1 and 2, **characterized in that** a profile of the chamfer (6) comprises a rectilinear segment forming an angle with the contact surface (3) of between 15 degrees and 80 degrees.

4. Valve according to Claim 1, **characterized in that** the deflector (6) is formed by a concave rounded corner of the outer periphery of the contact surface (3), and **in that** the dimension of the deflector formed by the arc of said rounding is at least equal to 2 mm.

5. Valve according to any one of Claims 1 to 4, **characterized in that** the deflector (6) is delimited at least in part by a frustoconical surface all around the contact surface (3).

6. Valve according to any one of Claims 1 to 5, **characterized in that** the flap is adapted to pivot about an axis-forming pin transverse to an axis of the valve body and arranged against the inlet wall of the chamber on the upstream portion side, in the direction of the flow stream of the gases, of the oblique opening of the valve body.

7. Valve according to any one of Claims 1 to 6, **characterized in that** the valve body (4) comprises a barrel having an end (4a) delimiting a bearing surface (8) configured so as to cooperate with the contact surface (3) in the closed configuration of the valve, and **in that** the deflector (6) extends at least in part radially to said barrel in the closed configuration.

8. Valve according to Claim 6 or Claims 6 and 7, **characterized in that** the dimension of the deflector is at its maximum in the portion diametrically opposed to the transverse pivoting axis of the flap.

9. Motor vehicle propulsion unit comprising:
- an engine (15),
- a turbocharger (10) of which a turbine (11) is arranged so as to be traversed by at least a portion of an exhaust gas stream from the engine (15),
- a bypass line (13) of the turbine (11) of the turbocharger (10) that is configured to bypass all or part of the exhaust gas stream upstream of the turbine (11),
- a valve (2) according to one of Claims 1 to 8 arranged in the bypass line (13).

10. Propulsion unit according to the preceding claim, **characterized in that** the valve (2) has in succession, in the direction of flow of the exhaust gases in the bypass line (13), the valve body (4) and then the closure flap (1).

11. Motor vehicle comprising a propulsion unit according to Claim 10.
